(19) Europäisches Patentamt

European Patent Office

Office européen des brevets

(11) Numéro de publication : **0 057 147**
**B1**

(12) **FASCICULE DE BREVET EUROPÉEN**

(45) Date de publication du fascicule du brevet :
**09.01.85**

(21) Numéro de dépôt : **82400124.2**

(22) Date de dépôt : **22.01.82**

(51) Int. Cl.⁴ : **G 01 R 31/28**

(54) **Système de test et de visualisation d'états de fonctionnement d'un circuit logique.**

(30) Priorité : **27.01.81 FR 8101463**

(43) Date de publication de la demande :
**04.08.82 Bulletin 82/31**

(45) Mention de la délivrance du brevet :
**09.01.85 Bulletin 85/02**

(84) Etats contractants désignés :
**BE DE GB IT LU NL SE**

(56) Documents cités :
**US-A- 3 562 644**
**US-A- 3 881 260**
**US-A- 3 924 181**
**ELEKTRONIK, vol. 25, no. 5, mai 1976, MÜNCHEN, (DE), F. ECKOLDT: "Logik-Analysator für TTL-Gatter", pages 48-50**

(73) Titulaire : **COMMISSARIAT A L'ENERGIE ATOMIQUE
Etablissement de Caractère Scientifique Technique et Industriel
31/33, rue de la Fédération
F-75015 Paris (FR)**

(72) Inventeur : **Laviron, André
15, rue des Champs Viaux Daix
F-21121 Fontaine-Les-Dijon (FR)**
Inventeur : **Berard, Claude
27, rue de Beauregard Marcilly/Tille
F-21120 Is Sur Tille (FR)**

(74) Mandataire : **Mongrédien, André et al
c/o BREVATOME 25, rue de Ponthieu
F-75008 Paris (FR)**

## Description

La présente invention concerne un système de test et de visualisation d'états de fonctionnement d'un circuit logique.

Ce système de test et de visualisation peut permettre l'étude de circuits électroniques comprenant une pluralité de composants logiques ; il peut permettre, par analogie, l'étude de la défaillance ou du bon fonctionnement d'un circuit logique, par exemple un circuit hydraulique dont un ou plusieurs composants peuvent être en état de défaillance ou de bon fonctionnement. Le circuit hydraulique est remplacé par un circuit électronique comprenant une pluralité de composants logiques dont le fonctionnement est équivalent, par analogie, à celui des composants correspondants du circuit hydraulique.

Généralement, un circuit constitué de composants logiques présente une sortie dont l'état logique dépend de l'état de défaillance ou de bon fonctionnement de chacun des composants. Ce circuit peut être, comme on l'a mentionné plus haut, soit un circuit à tester, soit un circuit simulant un circuit à tester. Chacun des composants du circuit présente généralement une entrée qui est reliée à une sortie d'un autre composant du circuit et une autre entrée qui peut recevoir un signal de simulation de la défaillance ou du bon fonctionnement de ce composant. Par la suite, on comprendra par l'étude du fonctionnement d'un circuit, soit l'étude de son bon fonctionnement, soit l'étude de sa défaillance.

Les systèmes de test de circuits logiques, selon l'art antérieur, sont connus, par exemple, du document US-A-3 562 644 et de l'article de F. Eckoldt, intitulé : « LOGIK-ANALYSATOR FÜR TTL-GATTER », paru dans la revue « ELEKTRONIK », Vol. 25, N° 5, mai 1976, pages 48-50.

Les systèmes qui permettent de tester l'état de fonctionnement d'un circuit logique, par simulation de la défaillance ou du bon fonctionnement des composants de ce circuit et qui permettent également de visualiser les résultats de cette simulation, sont généralement compliqués, coûteux et difficiles à mettre en œuvre. Ces systèmes comprennent généralement des moyens de simulation qui permettent d'appliquer par des sorties de commande, des signaux logiques de simulation de fonctionnement sur des entrées du circuit à tester ; ces systèmes comprennent aussi des moyens qui permettent de prélever sur des sorties du circuit, l'état logique des signaux logiques résultant de l'application de signaux de simulation sur les entrées du circuit ; ces moyens permettent également de prélever l'état logique des signaux à appliquer sur les entrées de ce circuit. Les résultats des tests ainsi effectués peuvent être affichés sur des moyens de visualisation. Généralement, l'utilisateur de tels systèmes de test et de visualisation, est gêné par le fait que seuls les résultats sont affichés ; il est en effet difficile d'obtenir simplement une image du circuit sur les moyens de visualisation de manière à faire correspondre rapidement, pour chaque composant du circuit et éventuellement pour l'ensemble du circuit, le type de simulation effectuée, le résultat de cette simulation ainsi que d'autres informations concernant les divers composants du circuit. Il est évidemment possible, mais au prix d'une programmation importante des moyens de commande d'affichage du système de visualisation, de commander ce système pour que celui-ci fasse apparaître sur les moyens de visualisation, d'une part l'image du circuit représentant schématiquement des composants déterminés de celui-ci ainsi que les liaisons entre ces composants déterminés et, d'autre part, en regard de chaque composant, des informations concernant le type de simulation effectué pour chaque composant, les résultats de cette simulation et éventuellement, d'autres informations particulières à chaque composant.

L'invention a pour but de remédier à ces inconvénients et notamment de réaliser un système de test et de visualisation d'états de fonctionnement d'un circuit logique, qui permet de visualiser de manière simple et peu coûteuse, d'une part les composants déterminés du circuit logique que l'on désire tester ainsi que les liaisons qui interviennent entre les composants et, d'autre part, à l'emplacement des composants sur un écran de visualisation, des informations relatives à la simulation effectuée sur chaque composant, aux résultats de cette simulation et éventuellement, d'autres informations concernant chaque composant. Ce système de test et de visualisation fait intervenir, de manière très simple, comme on le verra plus loin en détail, un cache qui recouvre au moins partiellement un écran de visualisation en occupant par rapport à celui-ci, une position prédéterminée ; ce cache porte des lignes qui représentent les liaisons entre les composants déterminés du circuit étudié ainsi que des fenêtres qui représentent ces composants ; l'affichage des informations concernant le type de simulation effectué sur chaque composant, le résultat de cette simulation et éventuellement l'affichage d'autres informations relatives à chaque composant, se fait de manière très simple, dans les fenêtres réalisées sur ou dans le cache ; comme on le verra plus loin en détail, l'opérateur qui utilise le système de test et de visualisation de l'invention n'intervient qu'en indiquant à ce système les coordonnées des emplacements des fenêtres sur l'écran, de manière que l'affichage des informations relatives à chaque composant et au circuit se fasse dans celles-ci.

L'invention a pour objet un système de test et de visualisation d'états de fonctionnement d'un circuit logique, comprenant des moyens de simulation présentant des sorties de commande pour appliquer des signaux logiques de simulation de fonctionnement sur des entrées de ce circuit logique, des moyens pour prélever sur des sorties de ce circuit logique l'état logique des signaux résultant de l'application des signaux logiques de simulation sur les entrées du circuit logique, et pour prélever l'état logique des signaux appliqués sur des entrées de ce circuit logique, caractérisé en ce qu'il comprend en outre des moyens de visualisation à écran, un cache apte à recouvrir au moins partiellement l'écran, ce cache occupant une position prédéterminée par rapport à l'écran et portant des lignes représentant des liaisons entre certains composants déterminés dudit circuit logique, ainsi que des fenêtres représentant lesdits composants déterminés, des moyens de commande reliés aux moyens de visualisation et aux moyens de prélèvement, les moyens de commande étant aptes à commander les moyens de visualisation pour que ceux-ci affichent pour chacun desdits composants déterminés, dans les fenêtres correspondant respectivement à chacun de ces composants, des informations relatives au moins à l'état de fonctionnement du composant correspondant, au repérage de ce composant dans le circuit et à la transmission éventuelle en sortie du signal reçu sur une entrée de ce composant.

Selon un mode particulier de réalisation de l'invention, les moyens de commande reliés aux moyens de visualisation sont constitués par un processeur commandé par des moyens d'entrée de données, pour fixer l'affichage desdites informations sur l'écran dans les fenêtres.

Selon un autre mode de réalisation de l'invention, les moyens de commande sont en outre reliés aux moyens de simulation pour déclencher ces moyens de simulation après acquisition des données relatives aux emplacements des informations à afficher sur l'écran.

Selon un autre mode de réalisation de l'invention, les moyens de commande sont en outre reliés aux moyens de simulation, pour commander l'affichage des informations relatives au circuit logique, aux emplacements fixés par les moyens d'entrée de données, lorsque les moyens de simulation ont déclenché une simulation.

Selon un autre mode de réalisation de l'invention, les moyens de prélèvement sont constitués par un multiplexeur présentant des entrées de multiplexage qui sont reliées aux sorties et aux entrées du circuit logique, et une entrée de commande reliée à une sortie de commande du processeur, pour que celui-ci sélectionne successivement, sur une sortie du multiplexeur, les signaux successifs correspondant aux signaux successifs prélevés sur les sorties du circuit logique, à partir de signaux successifs de commande appliqués sur l'entrée de commande du multiplexeur.

Selon un autre mode de réalisation de l'invention, le circuit logique est constitué par des composants logiques qui présentent chacun au moins une entrée de fonctionnement et une entrée de simulation, un signal de bon fonctionnement ou de défaillance pouvant être appliqué sur l'entrée de simulation, chaque composant étant apte à transmettre sur une sortie, lorsqu'il n'est pas défaillant, un signal de fonctionnement dépendant d'un signal de fonctionnement reçu sur l'entrée de fonctionnement, l'entrée de fonctionnement du premier composant du circuit logique constituant l'entrée de ce circuit logique et la sortie du dernier composant constituant la sortie du circuit logique.

Selon un autre mode de réalisation de l'invention, le système comprend en outre un compteur relié au processeur, ce compteur étant chargé initialement à une valeur N − 1, N correspondant au nombre d'entrées des moyens de prélèvement qui sont reliées aux sorties et aux entrées du circuit logique, ce compteur permettant, lorsque son contenu est égal à 0, d'arrêter l'acquisition des informations fournies en sortie du multiplexeur.

Enfin, selon un autre mode de réalisation de l'invention, le cache est transparent ou opaque.

D'autres aspects et avantages de l'invention ressortiront mieux de la description qui va suivre, donnée en référence aux dessins annexés dans lesquels :

la figure 1A représente schématiquement un circuit hydraulique dont on veut étudier l'état de fonctionnement, c'est-à-dire l'état de défaillance ou de bon fonctionnement, en cas de défaillance ou de bon fonctionnement d'un ou de plusieurs composants de ce circuit ;

la figure 1B représente schématiquement le circuit de la figure 1A dans lequel ont été rajoutés, sur chacun des composants du circuit, des moyens permettant de simuler la défaillance ou le bon fonctionnement de chacun de ses composants ;

la figure 2A est un circuit logique équivalent au circuit hydraulique de la figure 1B. Ce circuit permet plus particulièrement d'étudier l'état de défaillance de ce circuit, lorsqu'on simule la défaillance de chacun de ses composants, sur des entrées appropriées de ceux-ci ;

la figure 2B est un circuit logique équivalent au circuit hydraulique de la figure 1B. Ce circuit permet plus particulièrement d'étudier l'état de bon fonctionnement de ce circuit lorsqu'on simule le bon fonctionnement de chacun de ses composants, sur des entrées appropriées de ceux-ci ;

la figure 3 représente schématiquement le système de test et de visualisation, conforme à l'invention ;

la figure 4 est un organigramme qui permet de mieux comprendre le fonctionnement du système de l'invention.

Le système de test et de visualisation conforme à l'invention est destiné plus particulièrement à l'étude du fonctionnement, c'est-à-dire à l'étude de la défaillance ou du bon fonctionnement d'un circuit logique mais, comme on va le voir, il peut permettre, par analogie, l'étude du fonctionnement de circuits divers tels que des circuits hydrauliques par exemple.

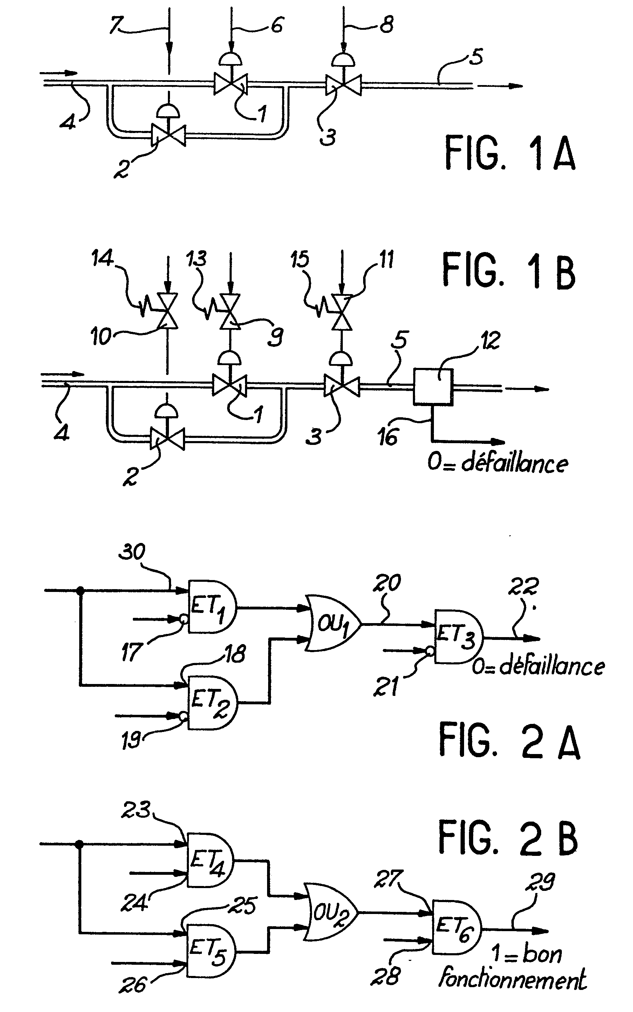

La figure 1A représente schématiquement un circuit hydraulique qui permet d'établir par exemple, la circulation entre un conduit amont 4 et un conduit aval 5, grâce à trois vannes pneumatiques 1, 2, 3 dont l'ouverture ou la fermeture peut être commandée par la présence ou l'absence d'air comprimé dans les conduits de commande 6, 7, 8. Dans ce circuit, les vannes constituent les seuls composants qui peuvent être, soit en état de défaillance, soit en état de bon fonctionnement. Le circuit hydraulique considéré est défaillant si le fluide n'est pas transmis dans le conduit aval 5. Lorsque seules les vannes 1 et 2 sont défaillantes, le fluide ne passe plus du conduit amont 4 vers le conduit aval 5 ; il en est de même lorsque les vannes 1 et 3 sont défaillantes. Dans ces deux cas, le circuit est mis en état de défaillance lorsque les vannes précitées sont défaillantes.

Lorsque seules les vannes 1 et 3 sont en bon fonctionnement, le fluide passe d'amont en aval ; le circuit reste donc en état de bon fonctionnement lorsque seules les vannes 1 et 3 sont en état de bon fonctionnement.

La figure 1B représente schématiquement le circuit de la figure précédente dans lequel ont été rajoutés, pour chacune des vannes 1, 2, 3, sur les conduits de commande 6, 7, 8, de celles-ci, des moyens 9, 10, 11, qui permettent de simuler l'état de défaillance ou de bon fonctionnement de ces vannes. Un détecteur 12 de passage fluide peut être disposé sur le conduit aval 5 pour indiquer, par exemple, par la présence d'un état logique 0 sur sa sortie 16, la défaillance du circuit hydraulique, lorsqu'un fluide fourni au conduit amont 4, ne se retrouve pas dans le conduit aval 5. Les moyens 9, 10, 11, qui permettent de simuler la défaillance des vannes qui leur correspondent, présentent respectivement des entrées de commande 13, 14, 15. Ces moyens sont respectivement constitués, par exemple, par une vanne à commande électrique qui intervient sur la commande pneumatique de chacune des vannes 1, 2, 3 du circuit. L'entrée de commande de chacune des vannes à commande électrique agit de manière que si une tension est appliquée sur cette entrée, cette vanne se ferme et coupe l'air comprimé qui arrive dans le conduit de commande de la vanne correspondante du circuit hydraulique. Cet arrêt d'arrivée de l'air comprimé simule la défaillance de la vanne correspondante dans le circuit. Cette défaillance étant simulée, il suffit alors d'observer le signal de sortie du détecteur de passage de fluide 12 pour savoir si cette défaillance interrompt ou non le passage du fluide vers la sortie des circuits hydrauliques.

La figure 2A est un circuit logique équivalent au circuit hydraulique de la figure 1B ; ce circuit équivalent permet d'étudier de manière plus simple et plus rapide, l'état de défaillance du circuit hydraulique décrit plus haut, c'est-à-dire sa réponse aux défaillances simulées. Dans ce circuit équivalent, la vanne 1 ainsi que la vanne 9 à commande électrique (qui permet de simuler la défaillance de la vanne 1), sont remplacées par la porte $ET_1$ ; une entrée directe 30 de cette porte est portée en permanence, à un niveau logique 1, pour simuler l'arrivée du fluide dans le conduit amont du circuit hydraulique et une entrée inversée 17 de cette porte est portée à un état logique de niveau 1, pour simuler la défaillance de ce circuit. De la même manière, la porte $ET_2$ est équivalente à la vanne 2 associée à la vanne de simulation 10, à commande électrique. Un état logique de niveau 1 sur l'entrée 18 de cette porte simule le passage du fluide, tandis qu'un état logique de niveau 1, sur l'entrée inverse 19, simule la défaillance de cette porte. Enfin, la porte $ET_3$ est équivalente à la vanne 3 et à la vanne de simulation 11, à commande électrique. L'entrée directe 20 de cette porte, portée à un état logique 1, simule le passage du fluide, tandis que l'entrée inverse 21, portée à un état logique 1, simule la défaillance de cette porte. La porte $OU_1$ est équivalente à la jonction entre les sorties des vannes 1 et 2. Ce circuit équivalent au circuit hydraulique de la figure 1B, est considéré en état de défaillance lorsque la sortie 21 de la porte $ET_3$ est à un niveau logique 0. On voit que, grâce à ce circuit équivalent, il est possible d'étudier de manière beaucoup plus simple, l'état de défaillance par exemple, du circuit hydraulique représenté sur la figure 1B, en fonction des états de défaillances simulées de chacun de ses composants.

Le circuit de la figure 2B est un circuit logique équivalent au circuit hydraulique de la figure 1B ; il permet d'étudier par exemple, l'état de bon fonctionnement de ce circuit hydraulique, en fonction des états de bon fonctionnement, simulés sur chacun de ses composants. De la même manière que précédemment, les vannes 1, 2, 3 ainsi que leurs vannes de commande de simulation 9, 10, 11, à commande électrique, sont respectivement remplacées par les portes $ET_4$, $ET_5$, et $ET_6$. La porte $OU_2$ représente la jonction entre les sorties des vannes 1 et 2. Comme précédemment, les portes $ET_4$, $ET_5$ et $ET_6$ présentent des entrées de fonctionnement 23, 25, 27 qui peuvent être portées à un niveau logique 1, pour simuler l'arrivée du fluide à l'entrée de la vanne correspondante. Les entrées 24, 26, 28 de ces portes permettent de simuler le bon fonctionnement de chacune des vannes, lorsqu'elles sont portées à un niveau logique 1. Si le circuit est en état de bon fonctionnement, la sortie 29 de la porte $ET_6$ est à un niveau logique 1, lorsqu'un niveau 1 simulant l'arrivée du fluide à l'entrée du circuit hydraulique est appliqué en permanence sur l'entrée 23 de la première porte $ET_4$. Ainsi, ce circuit logique équivalent au circuit hydraulique de la figure 1B permet d'étudier l'état de bon fonctionnement du circuit hydraulique, en fonction de l'état de bon fonctionnement de chacun de ses composants.

Comme on le verra plus loin en détail, le système de test et de visualisation conforme à l'invention agit de manière à appliquer, par exemple à chacune des entrées de simulation de défaillance ou de bon fonctionnement des portes ET des figures 2A et 2B, des signaux logiques de niveau 1 permettant de simuler le bon fonctionnement ou la défaillance de chacune de ces portes ; ce système permet ensuite de visualiser de manière simple, des informations relatives notamment à l'état de défaillance ou de bon fonctionnement du circuit et de ses composants, en fonction des signaux de simulation appliqués à chaque composant. Il permet également de visualiser des informations relatives aux signaux de simulation et aux rangs ou des repères des composants auxquels sont appliqués ces signaux de simulation.

Il est bien évident que ce système s'applique également à tout circuit logique différent des circuits qui viennent d'être décrits sur les figures 2A et 2B.

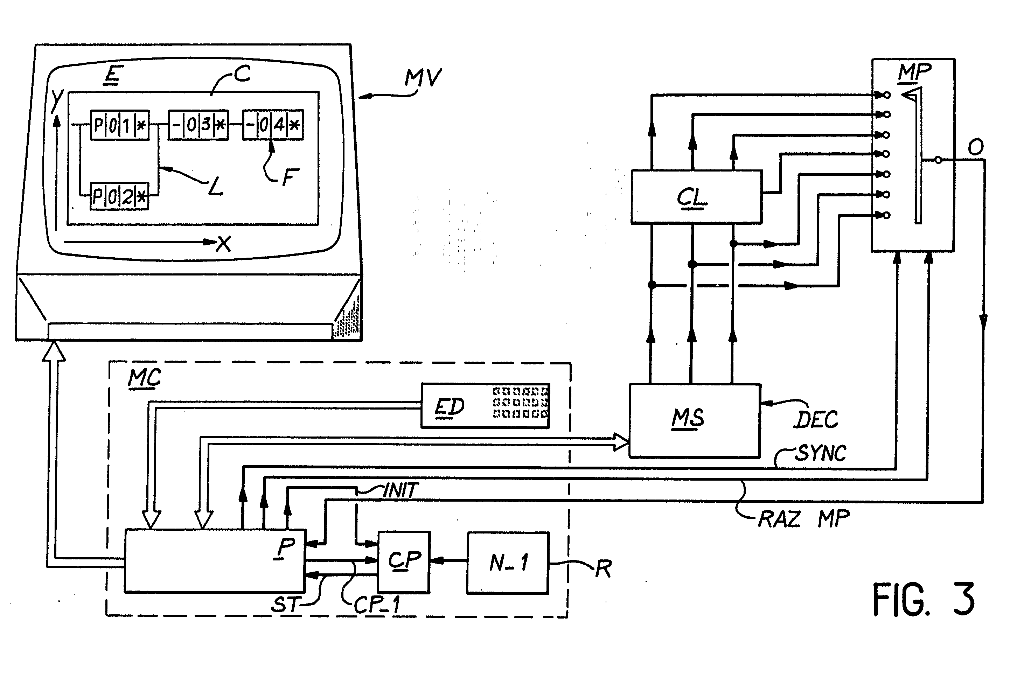

La figure 3 représente schématiquement un système de test et de visualisation, conforme à l'invention. Ce système permet de tester les états logiques de fonctionnement d'un circuit logique (CL) qui est constitué, comme on le verra plus loin en détail, par un ensemble de composants logiques. Ce système comprend des moyens de simulation (MS) qui présentent des sorties de commande permettant d'appliquer des signaux logiques de simulation, de fonctionnement, sur des entrées du circuit (CL). Des moyens (MP) permettent de prélever sur des sorties du circuit (CL), l'état logique des signaux sur ces sorties et de prélever l'état logique des signaux de simulation appliqués sur des entrées du circuit (CL). Il est bien évident que l'état logique des signaux prélevés sur les sorties du circuit (CL) dépend de l'état logique des signaux de simulation appliqués aux entrées de celui-ci ; ces entrées et ces sorties correspondent bien entendu, à certains composants déterminés du circuit (CL), non représentés sur la figure. Le système comprend aussi des moyens de visualisation (MV) à écran (E) ainsi qu'un cache (C) qui recouvre au moins partiellement l'écran (E) et qui occupe une position prédéterminée par rapport à celui-ci. Ce cache porte des lignes (L) et des fenêtres (F). Ces lignes représentent les liaisons entre certains des composants déterminés du circuit, tandis que les fenêtres (F) représentent ces composants. Le système comprend aussi des moyens de commande (MC) qui sont reliés aux moyens de visualisation (MV) ainsi qu'aux moyens de prélèvement (MP). Ces moyens de commande permettent, comme on le verra plus loin en détail, de commander les moyens de visualisation (MV) pour que ceux-ci affichent, pour chacun des composants déterminés du circuit (CL), dans les fenêtres (F) correspondant à chacun de ces composants, des informations qui sont relatives à l'état de fonctionnement du composant correspondant, au repérage de ce composant dans le circuit et à la transmission éventuelle en sortie, du signal reçu sur une entrée du composant.

Les moyens de commande (MC) sont constitués par un processus (P), commandé par des moyens (ED) d'entrée de données, qui permettent de fixer l'affichage des informations relatives au test du circuit logique (CL), dans les fenêtres (F). Ces moyens d'entrée de données permettent en fait à l'opérateur, d'indiquer aux moyens de visualisation (MV), les coordonnées de ces fenêtres, de manière que les informations relatives aux tests du circuit (CL), soient affichées dans ces fenêtres. Il est bien évident que dans le cas où des circuits logiques identiques doivent être testés successivement, les moyens (ED) d'entrée de données peuvent être constitués par une mémoire morte contenant toutes les données concernant les coordonnées des fenêtres (F), pour commander l'affichage des informations dans ces fenêtres. Les moyens de commande (MC) qui sont reliés aux moyens de visualisation (MV) et aux moyens de prélèvement (MP), sont en outre reliés aux moyens de simulation (MS), pour déclencher ces moyens de simulation comme on le verra plus loin en détail, après acquisition des données relatives aux emplacements des informations à afficher sur l'écran (E). Selon une autre variante, les moyens de commande (MC) sont reliés aux moyens de simulation (MS) de manière à commander l'affichage des informations relatives au circuit à tester, aux emplacements fixés par les moyens d'entrée de données, lorsque les moyens de simulation (MS) ont déclenché une simulation, de manière autonome, c'est-à-dire sans ordre spécifique reçu des moyens de commande (MC).

Les moyens de prélèvement (MP) sont constitués par un multiplexeur qui présente des entrées de multiplexage respectivement reliées aux sorties et aux entrées des circuits logiques (CL) à tester. Ce multiplexeur présente également une entrée de commande reliée à une sortie de commande du processeur (P) de manière à recevoir un signal de commande SYNC. C'est ce signal de commande qui permet de sélectionner successivement sur une sortie (O) du multiplexeur, les signaux prélevés successivement sur les sorties et les entrées du circuit (CL). Ce multiplexeur présente également une autre entrée de commande reliée à une sortie de commande du processeur (P) pour que celui-ci applique au multiplexeur un signal RAZMP qui permet de réinitialiser ce multiplexeur lorsque celui-ci a sélectionné successivement tous les signaux présents sur ses entrées ou d'initialiser ce multiplexeur avant une série de prélèvement.

Le circuit (CL) peut être par exemple l'un des circuits des figures 2A ou 2B ; il est constitué, comme décrit plus haut par des composants logiques qui présentent chacun au moins une entrée de fonctionnement et une entrée de simulation ; les entrées de simulation des différents composants reçoivent des moyens de simulation (MS) des signaux logiques de niveau 1 ou 0, qui simulent soit le bon fonctionnement, soit la défaillance du composant correspondant. Les moyens de simulation (MS) peuvent être par exemple ceux qui sont décrits dans la demande de brevet français n° 81 01 392 déposée le 26 janvier 1981 au nom du même demandeur et qui est intitulée « Générateur de signaux logiques combinés ». Dans l'exemple de circuit logique décrit sur la figure 2A par exemple, l'entrée de fonctionnement du premier composant (la porte $ET_1$), constitue l'entrée du circuit, tandis que la sortie du dernier composant (la porte $ET_3$), constitue la sortie du circuit.

Enfin, les moyens de commande (MC) comprennent en outre un compteur (CP) relié au processeur (P) ; ce compteur qui intervient comme on le décrira plus loin en détail, est chargé initialement à une valeur N − 1, dans laquelle N correspond au nombre des entrées des moyens de prélèvement (MP) qui sont reliés aux sorties et aux entrées du circuit logique (CL). Ce compteur peut être chargé initialement par la valeur N − 1, par exemple par l'intermédiaire d'un registre (R). Ce chargement peut être effectué sur la réception d'un ordre INIT du processeur (P). Le compteur (CP) permet aussi d'arrêter par un signal (ST) fourni au processeur (P), l'acquisition des informations de test fournies sur les sorties du multiplexeur (MP).

Le cache (C) qui occupe une position prédéterminée par rapport à deux axes de coordonnées fictifs XY liés à l'écran (E), peut être un cache transparent sur lequel les fenêtres et les liaisons entre ces fenêtres ont été dessinées ou, un cache opaque sur lequel les liaisons ont été dessinées et dans lequel les fenêtres ont été découpées.

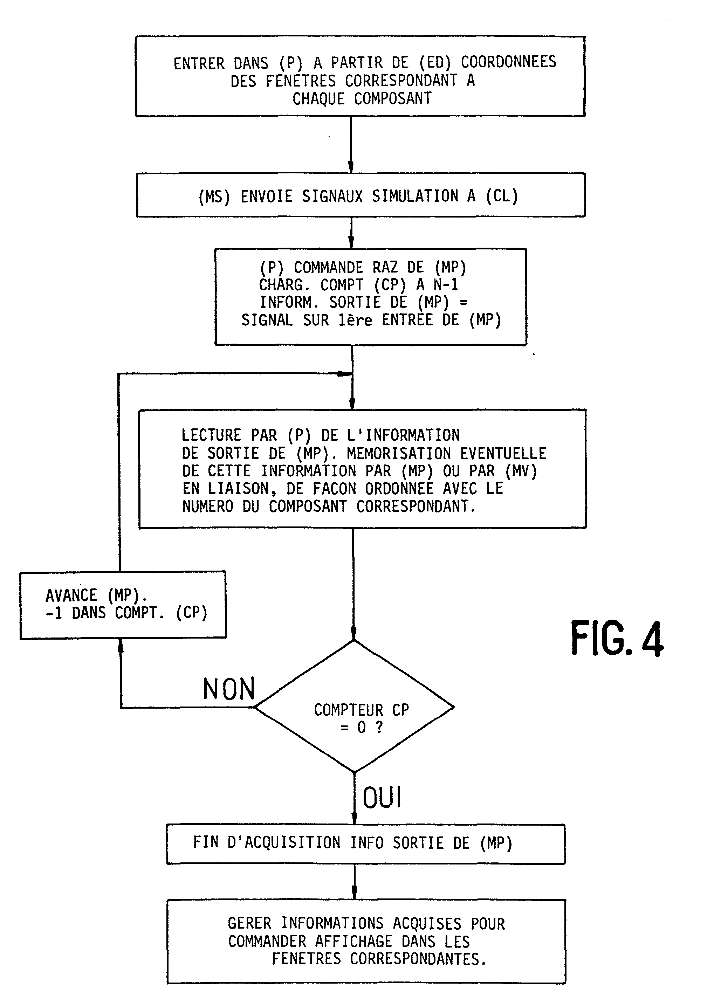

La figure 4 est un organigramme qui permet de mieux comprendre le fonctionnement du système de l'invention.

La première opération consiste à enregistrer dans une mémoire vive par exemple (non représentée) du processeur (P), à partir des moyens d'entrée de données (ED), les coordonnées des fenêtres portées par le cache (C), de manière que les résultats des tests de circuits (CL) soient affichés sur l'écran, en regard des fenêtres correspondant respectivement à chaque composant. Les données qui sont enregistrées dans la mémoire vive du processeur (P) comprennent également les numéros des composants correspondant à chaque fenêtre, ces numéros étant choisis de manière prédéterminée. Les moyens d'entrée de données (ED) peuvent être constitués, par exemple, par un clavier d'entrée de données, bien connu dans l'état de la technique. Ces données étant prises en compte par le processeur, la deuxième opération consiste à commander l'envoi de signaux de simulation sur les entrées du circuit logique à tester (CL), à partir des moyens de simulation (MS). Cette commande peut être une commande autonome de déclenchement appliquée sur une entrée de commande DEC des moyens de simulation (MS), qui préviennent alors par un signal approprié le processeur (P), que la simulation est déclenchée ; ce déclenchement peut être également provoqué par un signal approprié provenant du processeur (P). Les signaux de simulation appliqués sur les entrées du circuit logique (CL) peuvent être constitués par exemple par des signaux logiques combinés, de niveau 0 ou 1, formés par le générateur décrit dans la demande de brevet précitée. Comme on l'a indiqué précédemment, les entrées du multiplexeur (MP) sont reliées d'une part, aux sorties des moyens de simulation (MS) et d'autre part, aux sorties du circuit logique (CL). Lorsque les moyens de simulation ont été déclenchés soit de façon autonome, soit par le processeur (P), l'opération suivante consiste à remettre à zéro le multiplexeur (MP) par un signal RAZMP et à charger le compteur (CP) à la valeur N − 1 dans laquelle N correspond au nombre d'entrées du multiplexeur (MP). Ce chargement peut être effectué par exemple à partir d'un registre (R). Ce compteur est chargé à la valeur N − 1 lorsqu'il reçoit du processeur (P) un signal d'initialisation INIT. Ce compteur permet aussi, comme on le verra plus loin en détail, d'arrêter le déroulement des opérations d'affichage commandées par le processeur (P) lorsqu'il envoie à celui-ci un signal d'arrêt (ST), lorsque son contenu est égal à zéro. Lorsque le multiplexeur (MP) a été remis à zéro, l'information disponible sur la sortie de ce multiplexeur correspond au signal logique qui est appliqué à la première entrée de celui-ci. Cette information est alors chargée dans la mémoire vive du processeur (P) (non représentée). Le processeur (P) traite évidemment cette information en relation avec les données correspondant aux coordonnées des informations à afficher dans les fenêtres sur l'écran.

Lorsque les informations qui sont lues à la sortie du multiplexeur (MP) et qui correspondent au signal logique présent sur la première entrée de ce multiplexeur, ont été lues, il est nécessaire que le processeur (P) interroge le compteur (CP) pour savoir si son contenu est égal à 0. Si le contenu de ce compteur n'est pas égal à zéro, c'est que tous les signaux d'entrée du multiplexeur (MP) n'ont pas été pris en considération et qu'il est nécessaire de prendre en considération le signal présent sur l'entrée suivante du multiplexeur. Cette opération consiste à décrémenter de une unité, le contenu du compteur (CP), de manière à obtenir sur la sortie du multiplexeur les informations correspondant au signal logique présent sur l'entrée suivante du multiplexeur. De la même manière que précédemment, cette information est lue à la sortie du multiplexeur (MP) et mémorisée éventuellement, soit dans une mémoire interne du multiplexeur, soit dans une mémoire de visualisation (MV), soit dans la mémoire du processeur (P) en liaison, de façon ordonnée avec le numéro du composant correspondant ; en effet, comme on l'a indiqué plus haut, la mémoire vive du processeur (P) contient les coordonnées d'affichage des informations de chaque composant dans les fenêtres correspondantes. La décrémentation du contenu du compteur (CP) s'accompagne de l'envoi vers le multiplexeur (MP) d'un signal de commande SYNC de ce multiplexeur qui permet de prendre en considération sur la sortie de ce multiplexeur, les informations correspondant au signal présent sur l'entrée suivante du multiplexeur.

Lorsque tous les signaux présents sur les entrées du multiplexeur (MP) ont été passés successivement en revue par décrémentation du contenu du compteur (CP) et pour envoi de signaux SYNC au multiplexeur (MP), on a obtenu successivement sur la sortie de ce multiplexeur, toutes les informations de test des composants et le contenu du compteur (CP) est égal à 0. Ceci se traduit par l'apparition d'un signal (ST) sur une sortie du compteur (CP) qui indique au processeur (P), la fin d'acquisition des informations de sortie du multiplexeur (MP). A la réception de ce signal, le processeur peut alors commander l'affichage, dans les fenêtres correspondant à chaque composant, des informations successivement prélevées sur la sortie du multiplexeur (MP) et provisoirement mémorisées, soit dans une mémoire du multiplexeur (MP), soit dans une mémoire du processeur (P), soit éventuellement dans une mémoire des moyens de visualisation (MV).

Les informations qui apparaissent dans les fenêtres $F_1$ du cache (C) sur lequel apparaissent les liaisons entre les divers composants déterminés du circuit, sont de plusieurs types. Si l'on considère la première case de chaque fenêtre, l'information affichée, grâce au système décrit précédemment, peut être la lettre P ou le signe (−) par exemple qui désignent respectivement, soit la défaillance du composant correspondant, soit au contraire l'état de non-défaillance de ce composant. Les deux cases suivantes de chaque fenêtre concernent les informations qui sont, par exemple, sur la figure, 01, 02, 03, 04,... ; ces informations correspondent aux numéros que l'on a choisi d'attribuer à chaque composant, préalablement aux tests. Enfin, la dernière case contient par exemple un astérisque ou un signe (−) ; ces signes indiquent respectivement que le signal présent à l'entrée du composant n'est pas transmis en sortie ou qu'au contraire, le signal présent à l'entrée est transmis à la sortie de celui-ci. C'est ainsi par exemple que dans l'exemple de réalisation représenté sur la figure 3, qui correspond au test du circuit de la figure 2A, on peut lire, grâce aux données affichées, que les composants qui portent le numéro 1 et 2 sont défaillants et que le signal qu'ils reçoivent n'est pas transmis sur leur sortie. Les composants 3 et 4 ne sont pas défaillants mais ils ne transmettent aucun signal en sortie puisqu'ils ne reçoivent en fait aucun signal de sortie provenant des composants 1 et 2.

Il est bien évident que dans le système qui vient d'être décrit, les différents moyens auraient pu être remplacés par des moyens équivalents, sans sortir du cadre de l'invention.

## Revendications

1. Système de test et de visualisation d'états de fonctionnement d'un circuit logique (CL), comprenant des moyens de simulation (MS) présentant des sorties de commande, pour appliquer des signaux logiques de simulation de fonctionnement sur des entrées de ce circuit logique (CL), des moyens (MP) pour prélever sur des sorties du circuit logique (CL) l'état logique des signaux résultant de l'application des signaux logiques de simulation sur les entrées du circuit logique (CL) et pour prélever l'état logique des signaux appliqués sur des entrées de ce circuit logique (CL), caractérisé en ce qu'il comprend en outre des moyens de visualisation (MV) à écran (E), un cache (C) apte à recouvrir au moins partiellement l'écran, ce cache occupant une position prédéterminée par rapport à l'écran et portant des lignes (L) représentant des liaisons entre certains composants déterminés dudit circuit logique (CL), ainsi que des fenêtres (F) représentant lesdits composants déterminés, des moyens de commande (MC) reliés aux moyens de visualisation (MV) et aux moyens de prélèvement (MP), les moyens de commande (MC) étant aptes à commander les moyens de visualisation (MV) pour que ceux-ci affichent, pour chacun desdits composants déterminés, dans les fenêtres (F) correspondant respectivement à chacun de ces composants, des informations relatives au moins à l'état de fonctionnement du composant correspondant, au repérage de ce composant dans le circuit et à la transmission éventuelle en sortie du signal reçu sur une entrée de ce composant.

2. Système, selon la revendication 1, caractérisé en ce que les moyens de commande (MC) reliés aux moyens de visualisation (MV) sont constitués par un processeur (P) commandé par des moyens (ED) d'entrée de données, pour fixer l'affichage desdites informations sur l'écran (E) dans les fenêtres (F).

3. Système, selon la revendication 2, caractérisé en ce que les moyens de commande (MC) sont en outre reliés aux moyens de simulation (MS) pour déclencher ces moyens de simulation après acquisition des données relatives aux emplacements des informations à afficher sur l'écran (E).

4. Système, selon l'une quelconque des revendications 2 et 3, caractérisé en ce que les moyens de commande (MC) sont en outre reliés aux moyens de simulation (MS), pour commander l'affichage des informations relatives au circuit logique (CL), aux emplacements fixés par les moyens d'entrée de données, lorsque les moyens de simulation (MS) ont déclenché une simulation.

5. Système, selon l'une quelconque des revendications 2, 3 et 4, caractérisé en ce que les moyens de prélèvement (MP) sont constitués par un multiplexeur présentant des entrées de multiplexage qui sont reliées aux sorties et aux entrées du circuit logique (CL) et une entrée de commande reliée à une sortie de commande du processeur (P), pour que celui-ci, sélectionne successivement sur une sortie du multiplexeur (MP) les signaux successifs correspondant aux signaux successifs prélevés sur les sorties et les entrées du circuit logique (CL), à partir de signaux successifs de commande appliqués sur l'entrée de commande du multiplexeur (MP).

6. Système, selon l'une quelconque des revendications 1 à 5, caractérisé en ce que le circuit logique (CL) est constitué par des composants logiques qui présentent chacun au moins une entrée de fonctionnement et une entrée de simulation, un signal de bon fonctionnement ou de défaillance pouvant être appliqué sur l'entrée de simulation, chaque composant étant apte à transmettre sur une sortie, lorsqu'il n'est pas défaillant, un signal de fonctionnement dépendant d'un signal de fonctionnement reçu sur l'entrée de fonctionnement, l'entrée de fonctionnement du premier composant du circuit logique (CL) constituant l'entrée de ce circuit logique (CL) et la sortie du dernier composant constituant la sortie du circuit logique (CL).

7. Système selon la revendication 5, caractérisé en ce que les moyens de commande (MC) comprennent en outre un compteur (CP) relié au processeur (P), ce compteur étant chargé initialement à une valeur N − 1, N correspondant au nombre d'entrées des moyens de prélèvement (MP) qui sont reliés aux sorties et aux entrées du circuit logique (CL), ce compteur permettant, lorsque son contenu est égal à 0, d'arrêter l'acquisition des informations fournies en sortie du multiplexeur (MP).

8. Système selon l'une quelconque des revendications 1 à 7, caractérisé en ce que le cache (C) est transparent ou opaque.

### Claims

1. System for testing and displaying the operating condition of a logic circuit (CL), comprising simulation means (MS) having command outputs, for applying operation-simulating logic signals to inputs of the logic circuit (CL), sampling means (MP) for sampling at the outputs of the logic circuit (CL) the logic state of signals resulting from the application of operation-simulating logic signals to the inputs of the logic circuit (CL) and for sampling the logic state of those signals applied to the inputs of the logic circuit (CL), characterized in that it additionally comprises a display means (MV) having a screen (E), a mask (C) adapted to cover at least a part of the screen (E), said mask occupying a predetermined position with respect to the screen and having lines (L) representing links between certain predetermined components of said logic circuit (CL) and windows (F) representing said predetermined components, and command means (MC) connected to the display means (MV) and the sampling means (MP), the command means (MC) being adapted to command the display means (MV) whereby it displays, for each of said predetermined components and in the windows (F) corresponding respectively to each of said predetermined components, information relating at least to the operating condition of the respective component, to its location in the circuit and to the possible transmission to the output of a signal received at the input of said component.

2. System according to Claim 1, characterized in that the command means (MC) connected to the display means (MV) comprise a processor (P) commanded by data-input means (ED) to display said information on the screen (E) within the windows (F).

3. System according to Claim 2, characterized in that the command means (MC) are additionally connected to the simulation means (MS) to re-

lease said simulation means after acquisition of data relating to the placement of information to be displayed on the screen (E).

4. System according to either of Claims 2 and 3, characterized in that the command means (MC) are additionally connected to the simulation means (MS) to command the display of information relating to the logic circuit (CL), at locations fixed by the data-input means, when the simulation means (MS) have released a simulation.

5. System according to any one of Claims 2, 3 and 4, characterized in that the sampling means (MP) comprise a multiplexer having multiplexing inputs connected to the outputs and the inputs of the logic circuit (CL), and a command input connected to a command output of the processor (P), whereby the latter selects successively, at an output of the multiplexer (MP), successive signals corresponding to the successive signals sampled at the outputs and the inputs of the logic circuit (CL), from successive command signals applied to the command input of the multiplexer (MP).

6. System according to any one of Claims 1 to 5, characterized in that the logic circuit (CL) comprises logic components each having at least one operation input and a simulation input, a signal of good operation or of defect being supplied to the simulation input, each component being adapted to transmit at an output, when it is not defective, an operation signal depending on an operation signal received at the operation input, the operation input of the first component of the logic circuit (CL) being the input of the logic circuit (CL), and the output of the last component being the output of the logic circuit (CL).

7. System according to Claim 5, characterized in that the command means (MC) additionally comprise a counter (CP) connected to processor (P), said counter being initially loaded to a value N − 1, wherein N is the number of inputs of the sampling means (MP) connected to the outputs and the inputs of the logic circuit (CL), said counter permitting when its content is zero, the halting of acquisition of information supplied at the output of the multiplexer (MP).

8. System according to any one of Claims 1 to 7, characterized in that the mask (C) is transparent or opaque.

### Ansprüche

1. System zum Testen und zur Zustandsanzeige eines logischen Kreises (CL), enthaltend eine Simulationseinrichtung (MS) mit Befehlsausgängen zum Zuführen logischer Funktionssimulationssignale zu den Eingängen dieses logischen Kreises (CL), eine Einrichtung (MP) zum Abgreifen des logischen Zustandes der Signale von den Ausgängen des logischen Kreises (CL), der sich infolge der an den Eingängen des logischen Kreises (CL) anliegenden logischen Simulationssignale ergibt, und zum Abgreifen des logischen Zustandes der an den Eingängen des logischen Kreises (CL) anliegenden Signale dadurch gekennzeichnet, daß es weiterhin eine Anzeigeeinrichtung (MV) mit Bildschirm (E) enthält und eine Maske (C), die dazu bestimmt ist, wenigstens einen Teil des Bildschirm abzudecken, und die gegenüber dem Bildschirm eine vorbestimmte Lage einnimmt und Linien (L) trägt, die Verbindungen zwischen gewissen ausgesuchten Komponenten des logischen Kreises (CL) darstellen, und Fenster (F) aufweist, die die genannten ausgesuchten Komponenten darstellen, daß es weiterhin eine Steuereinrichtung (MC) aufweist, die dazu bestimmt ist, die Anzeigeeinrichtung (MV) so zu beeinflussen, daß diese für jede der ausgesuchten Komponenten in den entsprechenden zugehörigen Fenstern entsprechende Informationen wenigstens über den Zustand der zugehörigen Komponente, über den Ort dieser Komponente im Kreis und über die eventuelle Übertragung eines an einem ihrer Eingänge anstehenden Signals zu ihrem Ausgang anzeigt.

2. System nach Anspruch 1, dadurch gekennzeichnet, daß die Steuereinrichtung (MC), die mit der Anzeigeeinrichtung (MV) verbunden ist, aus einem Prozessor (P) besteht, der von einer Dateneingabeeinrichtung (ED) angesteuert ist, um die Anzeigen der Informationen in den Fenstern (F) auf dem Schirm (E) festzuhalten.

3. System nach Anspruch 2, dadurch gekennzeichnet, daß die Steuereinrichtung (MC) weiterhin mit der Simulationseinrichtung (MS) verbunden ist, um diese nach der Erfassung der den Plätzen der auf dem Schirm (E) darzustellenden Informationen entsprechenden Daten abzuschalten.

4. System nach einem der Ansprüche 2 und 3, dadurch gekennzeichnet, daß die Steuereinrichtung (MC) weiterhin mit der Simulationseinrichtung (MS) verbunden ist, um die Anzeige der Informationen in Bezug auf den logischen Kreis, die durch die Dateneingabeeinrichtung festgelegten Plätze zu steuern, wenn die Simulationseinrichtung (MS) eine Simulation ausgelöst hat.

5. System nach einem der Ansprüche 2, 3 und 4, dadurch gekennzeichnet, daß die Abgreifeinrichtung (MP) von einem Multiplexer gebildet ist, der Multiplexeingänge aufweist, die mit den Ausgängen und mit den Eingängen des logischen Kreises (CL) verbunden sind, und weiterhin einen Steuereingang aufweist, der mit einem Steuerausgang des Prozessors (P) verbunden ist, damit jener nacheinander an einem Ausgang des Multiplexers (MP) die aufeinanderfolgenden Signale auswählt, die den aufeinanderfolgenden von den Ausgängen und den Eingängen des logischen Kreises (CL) abgegriffenen Signalen entsprechen, sobald die aufeinanderfolgenden Steuersignale an dem Steuereingang des Multiplexers (MP) anliegen.

6. System nach einem der Ansprüche 1 bis 5, dadurch gekennzeichnet, daß der logische Kreis (CL) von logischen Baugruppen gebildet ist, die jeweils wenigstens einen Funktionseingang und einen Simulationseingang aufweisen, und bei denen man an den Simulationseingang ein Signal ordnungsgemäßer Funktion oder ein Fehlersignal anlegen kann, wobei jede Baugruppe dazu eingerichtet ist, in fehlerfreiem Zustand an einen Ausgang ein Funktionssignal zu übertragen, das von einem am Funktionseingang anliegenden Funktionssignal abhängt, wobei der Funktionseingang der ersten Baugruppe des logischen Kreises (CL) den Eingang des logischen Kreises (CL) und der Ausgang der letzten Baugruppe den Ausgang des logischen Kreises (CL) darstellen.

7. System nach Anspruch 5, dadurch gekennzeichnet, daß die Steuereinrichtung (MC) weiterhin einen Zähler (CP) enthält, der mit dem Prozessor (P) verbunden ist und zu Anfang auf den Wert N − 1 eingestellt wird, wobei N der Anzahl der Eingänge der Abgreifeinrichtung (MP), die mit den Ausgängen und den Eingängen des logischen Kreises (CL) verbunden sind, entsprechen, und daß der Zähler im Zustand O erlaubt, die Erfassung der am Ausgang des Multiplexers (MP) zur Verfügung stehenden Informationen zu unterbrechen.

8. System nach einem der Ansprüche 1 bis 7, dadurch gekennzeichnet, daß die Maske C transparant oder undurchsichtig ist.

FIG. 1 A

FIG. 1 B

0 = défaillance

FIG. 2 A

0 = défaillance

FIG. 2 B

1 = bon
fonctionnement

FIG. 3

0 057 147

ENTRER DANS (P) A PARTIR DE (ED) COORDONNEES
DES FENETRES CORRESPONDANT A
CHAQUE COMPOSANT

(MS) ENVOIE SIGNAUX SIMULATION A (CL)

(P) COMMANDE RAZ DE (MP)
CHARG. COMPT (CP) A N-1
INFORM. SORTIE DE (MP) =
SIGNAL SUR 1ère ENTREE DE (MP)

LECTURE PAR (P) DE L'INFORMATION
DE SORTIE DE (MP). MEMORISATION EVENTUELLE
DE CETTE INFORMATION PAR (MP) OU PAR (MV)
EN LIAISON, DE FACON ORDONNEE AVEC LE
NUMERO DU COMPOSANT CORRESPONDANT.

AVANCE (MP).
-1 DANS COMPT. (CP)

FIG. 4

NON

COMPTEUR CP
= 0 ?

OUI

FIN D'ACQUISITION INFO SORTIE DE (MP)

GERER INFORMATIONS ACQUISES POUR
COMMANDER AFFICHAGE DANS LES
FENETRES CORRESPONDANTES.

3